Europäisches Patentamt

European Patent Office

Office européen des brevets

(19)

(11) EP 0 471 478 B1

(12) # EUROPEAN PATENT SPECIFICATION

(45) Date of publication and mention
of the grant of the patent:
**17.04.1996 Bulletin 1996/16**

(51) Int Cl.⁶: **H04N 5/72**, H04N 9/31

(21) Application number: **91307066.0**

(22) Date of filing: **01.08.1991**

(54) **Large screen display apparatus**

Grossbildschirmanzeigevorrichtung

Appareil d'affichage à grand écran

(84) Designated Contracting States:
**DE FR GB**

(30) Priority: **03.08.1990 JP 207289/90**

(43) Date of publication of application:
**19.02.1992 Bulletin 1992/08**

(73) Proprietor: **MITSUBISHI DENKI KABUSHIKI KAISHA
Chiyoda-ku Tokyo (JP)**

(72) Inventors:
• **Nakano, Masaaki, c/o Mitsubishi Denki K.K.
Amagasaki-shi, Hyogo (JP)**

• **Shiramatsu, Naoki, c/o Mitsubishi Denki K.K.
Amagasaki-shi, Hyogo (JP)**
• **Iwata, Shuji, c/o Mitsubishi Denki K.K.
Amagasaki-shi, Hyogo (JP)**
• **Nakajima, Hajime, c/o Mitsubishi Denki K.K.
Amagasaki-shi, Hyogo (JP)**

(74) Representative: **Nicholls, Michael John et al
J.A. KEMP & CO.
14, South Square
Gray's Inn
London WC1R 5LX (GB)**

(56) References cited:
**EP-A- 0 203 646**          **EP-A- 0 331 847**
**GB-A- 2 236 447**          **US-A- 4 866 530**

## Description

This invention relates to a projection type large-size screen display apparatus.

Hitherto, there has been developed a large-size screen display apparatus for displaying a single image on a screen having a size of 40 inches or thereabouts by merging optical images formed on respective monochromatic cathode-ray-tubes of red, blue, green with the size of 7 inches. This conventional large-size screen display apparatus has several disadvantages such as the drop in brightness due to the increase in the projection magnification factor necessary for effecting display on a large-size screen, and the increase in volume of a cabinet for securing a long projection distance.

As a large-size screen display apparatus which is capable of effecting display on a large-size screen while the size of the apparatus and the brightness of the picture are maintained, there is known a large-size screen display comprising a plurality of projection display devices having the size of 40 inches or thereabouts arranged in a matrix layout.

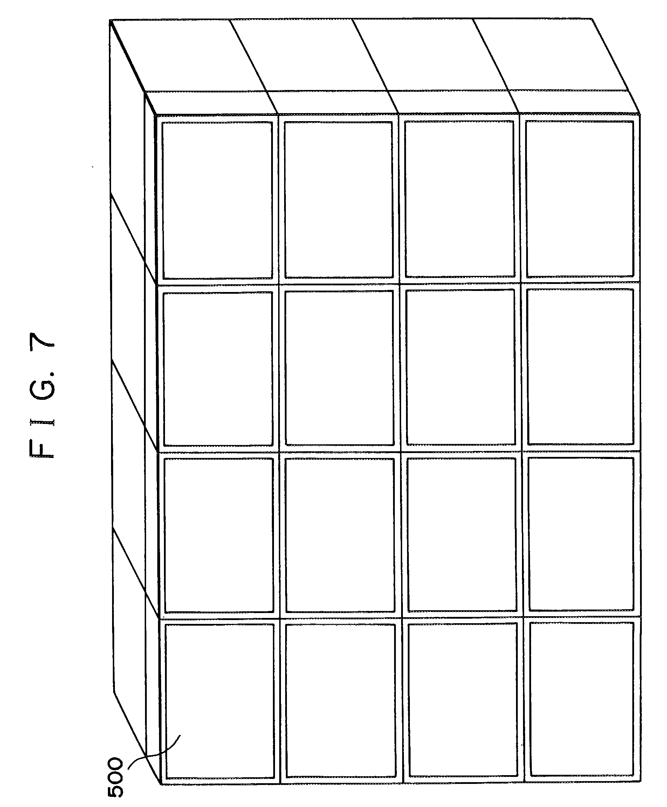

Fig. 7 of the accompanying drawings is a schematic representation of a conventional multi-display apparatus having a plurality of projection display apparatus arranged in a matrix. In Fig. 7, the reference numeral 500 designates a rear-projection type projection display device. This projection device has a display screen consisting of a column including four of the projection display devices 500 and a row including four of the projection display devices 500, and each projection display device 500 displays an enlarged subdivision of one picture frame by the use of a video signal quadrupled both longitudinally and laterally.

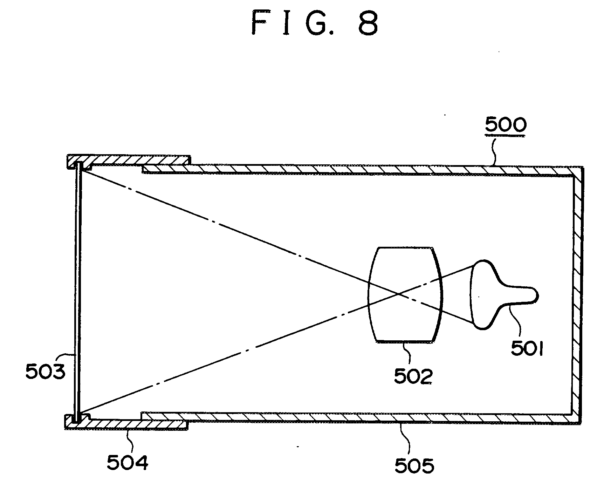

Fig. 8 is a cross sectional view of the projection display device 500 of Fig. 7. In Fig. 8, the reference numeral 501 designates a cathode-ray-tube (hereinafter referred to as CRT): 502, a projection lens; 503, a projection screen; 504, a screen frame; 505, a housing for accommodating and supporting the CRT 501 and the projection lens 502.

An enlarged subdivisional image formed on the CRT 501 is projected onto the projection screen 503 through the projection lens 502. The projection screen 503 is attached to the housing 505 with the periphery thereof fixed in a groove of the housing. One large-size screen is made up of a plurality of projection screens 503 arranged planarly in a matrix layout, each being mounted to the corresponding screen frame 504, thereby producing the large-size screen display apparatus shown in Fig. 7.

The conventional large-size screen display apparatus having the above structure has non-display areas having a stripe shape appearing longitudinally and laterally on the projection screen due to the presence of the screen frame used for securing the projection screen in the optical path which impairs the picture quality.

This invention is aimed at overcoming the drawbacks in the conventional large-size screen display apparatus, and an object of the invention is to provide a high quality large-size screen display apparatus by suppressing the occurrence of the non-display areas which impair the picture quality.

It has been proposed, for instance in US-A-4866530, EP-A-0331847 and EP-A-0203646 to provide a Fresnel lens in the display to reduce the dark area between units.

According to one aspect of this invention there is provided a projection display device for use in large screen display apparatus having a plurality of such devices arranged in a matrix array, the device comprising:

(a) an optical image forming section for creating an optical image from a video signal;
(b) a projection lens for projecting an enlarged image of the optical image formed by the optical image forming section;
(c) a housing for accommodating and supporting the optical image forming section and the projection lens; and
(d) a screen for displaying the optical image by transmission of projected light rays incident thereon to its outer viewing side, characterized in that the screen is composed of a concave lens provided on the inner, light entrance side to transmit a part of the light towards the periphery of the screen, and a diffusing surface provided on the outer, viewing side, with the periphery thereof mounted to the housing.

Another aspect of the invention provides a projection display device for use in large screen display apparatus having a plurality of such devices arranged in a matrix array, the device comprising:

(a) an optical image forming section for creating an optical image from a video signal;
(b) a projection lens for projecting an enlarged image of the optical image formed by the optical image forming section;
(c) a housing for accommodating and supporting the optical image forming section and the projection lens; and
(d) a screen for displaying the optical image by transmission of projected light rays incident thereon to its outer viewing side, characterised in that the screen is composed of a distributed-refraction plate provided on the inner, light entrance side and in which the refractive index increases progressively in proportion to a distance from the centre to the corners to transmit a part of the light towards the periphery of the screen, and a diffusing surface provided on the outer, viewing side, with the periphery thereof mounted to the housing.

Accordingly, it is possible to prevent the impairment in the picture quality by preventing the occurrence of any non-display areas due to the matrix arrangement of plural projection type display devices.

The invention will be further described by way of non-limitative example with reference to the accompanying drawings, in which:-

Fig. 1 is a cross sectional plan view showing the structure of a projection display device according to a first embodiment of the invention;

Fig. 2 is a perspective view showing the arrangement of a large-size screen display apparatus according to the first embodiment of the invention;

Fig. 3 is a cross sectional plan view showing the structure of a projection display device according to a second embodiment of the invention;

Fig. 4 is a partially enlarged cross sectional plan view showing the structure of a projection screen similar to a previously proposed display;

Fig. 5 is a partially enlarged cross sectional plan view of a further projection screen;

Fig. 6 is a partially enlarged cross sectional plan view showing the structure of a projection screen according to a third embodiment of the present invention;

Fig. 7 is a perspective view showing the arrangement of a multi-display having a plurality of conventional projection display device arrayed; and

Fig. 8 is a cross sectional plan view of the conventional projection display device shown in Fig. 7.

Upon reference to the accompanying drawings, some embodiments of a projection display apparatus according to this invention will be described hereunder together with, for comparison, some other arrangements.

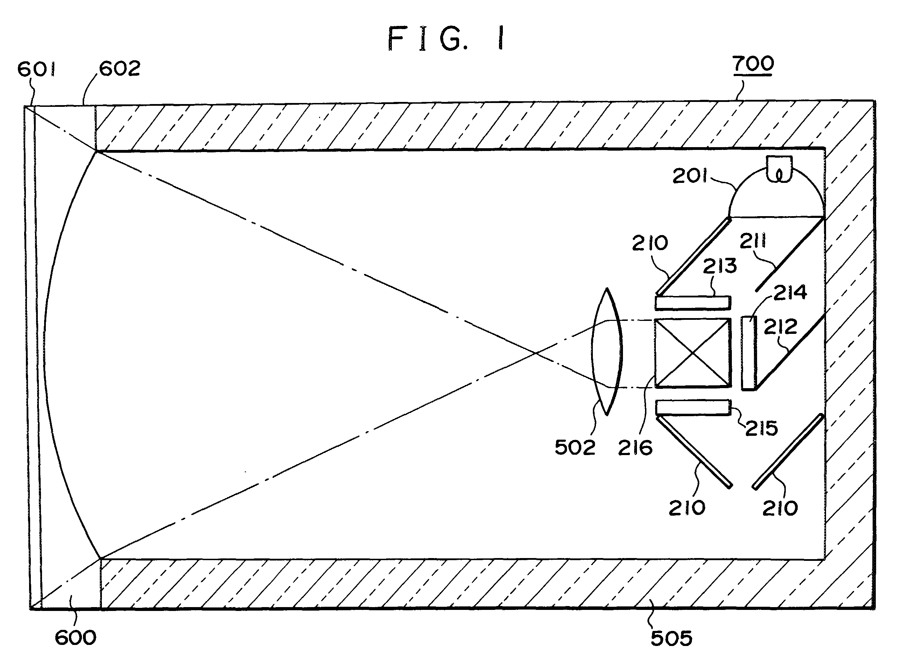

Fig. 1 is a cross sectional plan view showing the structure of a projection display device exemplifying this invention employing a three-plate liquid crystal light bulb.

In Fig. 1, the reference numeral 201 designates a halogen lamp light source; and 210, a mirror. 211 designates a blue reflecting dichroic mirror; and 212, a green reflecting dichroic mirror. The reference numeral 213 designates a blue light bulb; 214, a green light bulb; and 215, a red light bulb, each light bulb consisting of a liquid crystal cell sandwiched between two crossed polarizing plates to form an optical image in respective corresponding color. The reference numeral 216 designates a dichroic prism for composing a single multicolored image by mergin three optical color images; 502, a projection lens; and 505, a housing accommodating and supporting the light source 201, mirror 210, dichroic mirrors 211, 212, light bulbs 213, 214, 215, dichroic prism 216, and projection lens 502.

The reference numeral 600 designates a projection screen composed of a diffusing surface 601 provided on the viewing side and a concave transparent plate 602 provided on the light entrance side attached together. Further, the projection screen 600 is mounted to the housing 505 with the concave lens plate 602 provided on the light entrance side. Here, the reference numeral 700 designates a projection display apparatus.

The operation of the projection display apparatus will be explained hereinbelow.

Light rays emanating from the halogen lamp 201 are split into blue, green and red by means of the blue reflecting dichroic mirror 211 and the green reflecting dichroic mirror 212. Light rays in each primary color are projected onto the screen 600 through the projection lens 502 after having been modified in light intensity by means of the blue light bulb 213, the green light bulb 214, and the red light bulb 215, respectively.

The light rays to be projected at the corners of the optical image on the respective light bulbs are incident on the jointing portion or thereabouts where the concave lens plate 602 and the housing are linked together. Thereafter, the light rays are refracted towards the periphery of the screen 600 so as to form an image at the corners of the diffusing surface 601. Therefore, when the screen 600 is viewed from the direction opposite to the projecting direction, a composite optical image produced by merging images from respective light bulbs is projected on to the entire screen 600.

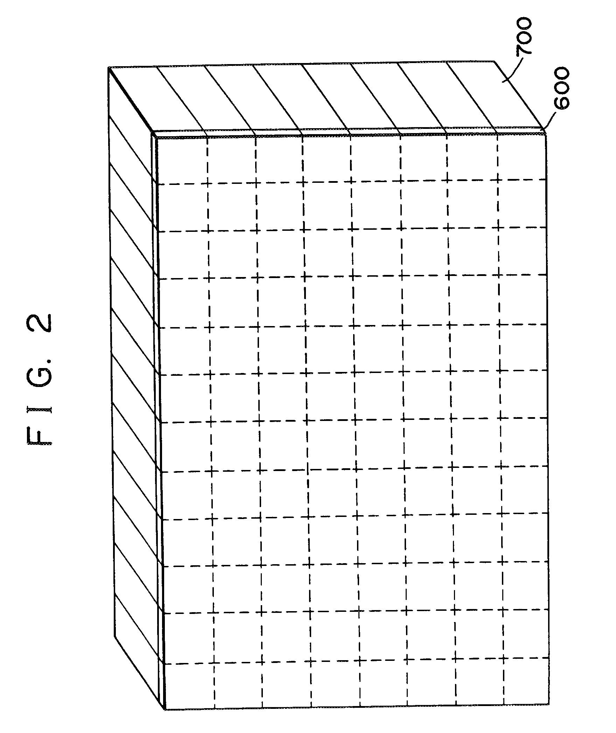

Fig. 2 is a perspective plan view showing the arrangement of the multi-display large screen display apparatus having a plurality of projection display devices 700 arrayed both longitudinally and laterally in a matrix layout. Images are displayed on the whole screen 600 of each of the projection display devices 700 which are arranged without a seam, thereby forming one large-size display screen without non-display areas.

Assuming that each of the light bulbs 213, 214, 215 of Fig. 1 are manufactured in accordance with specifications set forth in table 1, and the projection magnification factor is selected as three times, the display characteristics of each projection display apparatus will be as described in table 2.

TABLE 1

| NUMBER OF PIXELS | 32 x 32 pixels |
|---|---|
| PIXELS PITCH | 1 mm |
| SIZE OF IMAGE FORMING AREA | 32 x 32 mm |

TABLE 2

| NUMBER OF PIXELS | 32 x 32 pixels |
|---|---|
| PIXEL PITCH | 3 mm |
| SCREEN SIZE | 96 x 96 mm |

As is evident from the above tables, it is possible to constitute a large-size screen projection display apparatus, approximately equivalent to the size of a high definition television set, having the size of 240 inches and 960 x 1700 pixels by arranging the projection display devices 700 into a matrix layout composed of 30 displays in a column, and 53 displays in a row. Further, according to the first embodiment of this invention, since the projection magnification factor is selected as low as three times, a thin type large-size screen display apparatus can be produced because of the reduction in projection distance.

Given that a screen gain is selected to 1, since a screen brightness is in reverse proportion to the square of the projection magnification factor, the screen brightness will be one ninth of the brightness of the light bulb in the case where the projection magnification factor is selected as 3 times, and the screen brightness will be one sixteenth of the brightness of the light bulb in the case where the projection magnification factor is selected as 4 times. In the existing apparatus, since the projection magnification factor is usually selected to 10 times, the brightness drops to as low as one hundredth of the brightness of the light bulb. To counter this, according to this invention, it is possible to secure a high screen brightness by selecting the projection magnification factor to be in the range of fourfold or less.

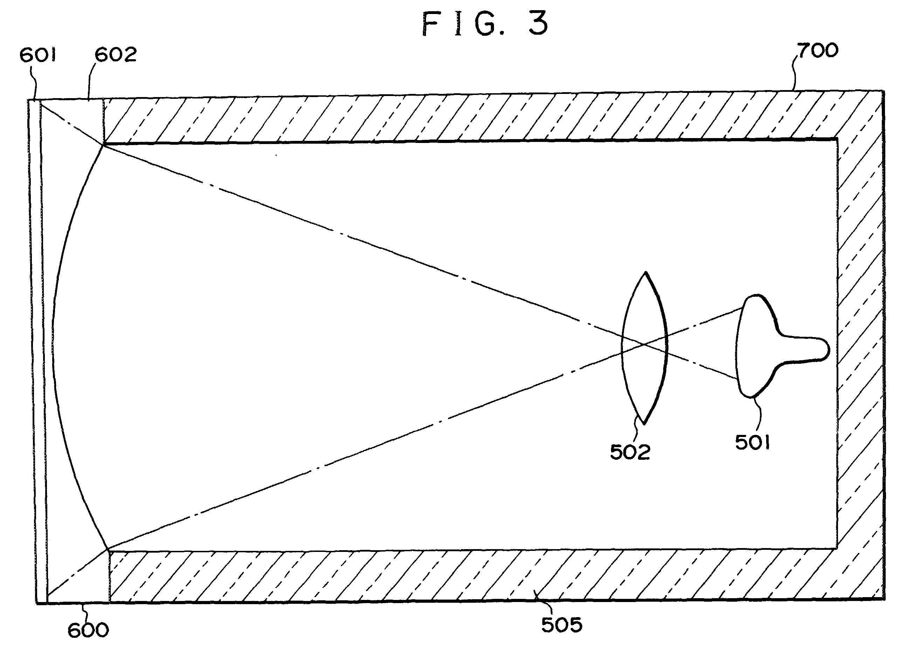

While the optical image forming section according to the first embodiment has been described by the use of a three-plate liquid crystal light bulb system, it may be appreciated that the same advantage may be obtained by the use of a single-plate light bulb having a color filter provided on a single liquid crystal cell. Moreover, as shown in Fig. 3, similar results may be produced by the use of the projection CRT 501 in the optical image forming section.

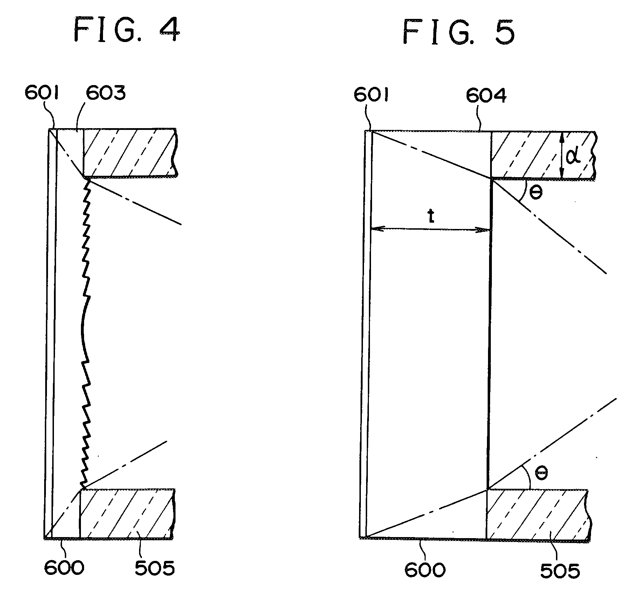

Fig. 4 illustrates for comparison an arrangement similar to prior proposals using a projection screen 600 to mounted to the housing 505 and being composed of the diffusing surface 601 having the same configuration as above and provided on the viewing side, and a fresnel lens 603 provided on the incident side, both being attached together.

In a different arrangement, the projection screen 600 could be replaced by a screen consisting of the diffusing surface 601 provided on the viewing side and a transparent plate 604 provided on the light entrance side, both attached together. In this case, however, the thickness "t" of the transparent plate 604 should be given by

$$t = d \ (n_p^2/\sin^2 \theta - 1)^{1/2}$$

where "d" denotes the thickness of the housing 505; θ, an incident angle of the principal light rays to form the corners of the optical image in the optical image forming section, i.e. light bulb, relative to the transparent plate 604; and $n_p$, the refractive index of the transparent plate 604.

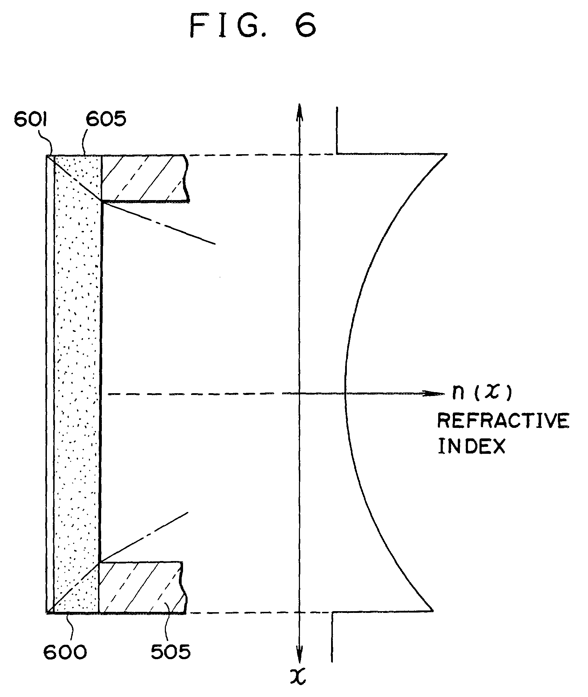

In accordance with a third embodiment of the present invention, however, as shown in Fig. 6, the projection screen may be constituted by the combination of the diffusing surface 601 and a distributed-refraction plate 605 attached together. Namely, the distributed-refraction plate 605 is such a plate wherein the refractive index is least at the center and increases progressively in proportion to the square of a distance (x) from the center to the corners, and the plate may be manufactured by the use of the diffusion polymerization method of plastic having different refractive indices.

As mentioned above, according to this invention, it is possible to produce the large-size screen display apparatus capable of producing a high quality picture because of the elimination of the non-display areas from the displays arranged in the matrix.

Several embodiments of the invention have now been described in detail. It is to be noted, however, that these descriptions of specific embodiments are merely illustrative of the principles underlying the inventive concept. It is contemplated that various modifications of the disclosed embodiments, as well as other embodiments of the invention will, without departing from the scope of the invention, are apparent to persons skilled in the art.

## Claims

1. A projection display device for use in large screen display apparatus having a plurality of such devices arranged in a matrix array, the device (700) comprising:

   (a) an optical image forming section (200-216) for creating an optical image from a video signal;
   (b) a projection lens (502) for projecting an enlarged image of the optical image formed by the optical image forming section (200-216);
   (c) a housing (505) for accommodating and supporting the optical image forming section (200-216) and the projection lens (502); and
   (d) a screen (600) for displaying the optical image by transmission of projected light rays incident thereon to its outer viewing side, characterized in that the screen (600) is composed of a concave lens (602) provided on the inner, light entrance side to transmit a part of the light towards the periphery of the screen (600), and a diffusing surface (601) provided on the outer, viewing side, with the periphery thereof mounted to the housing (505).

2. A projection display device for use in large screen display apparatus having a plurality of such devices arranged in a matrix array, the device (700) comprising:

   (a) an optical image forming section (200-216) for creating an optical image from a video signal;
   (b) a projection lens (502) for projecting an enlarged image of the optical image formed by the optical image forming section (200-216);
   (c) a housing (505) for accommodating and supporting the optical image forming section (200-216) and the projection lens (502); and

(d) a screen (600) for displaying the optical image by transmission of projected light rays incident thereon to its outer viewing side, characterised in that the screen (600) is composed of a distributed-refraction plate (605) provided on the inner, light entrance side and in which the refractive index increases progressively in proportion to a distance from the centre to the corners to transmit a part of the light towards the periphery of the screen (600), and a diffusing surface (601) provided on the outer, viewing side, with the periphery thereof mounted to the housing (505).

3. A large screen display apparatus comprising a plurality of display devices according to any one of the preceding claims.

**Patentansprüche**

1. Projektionsanzeigevorrichtung zur Verwendung in Großbildschirmanzeigegeräten, die eine Vielzahl derartiger Vorrichtung in einer Matrixanordnung besitzen, wobei die Vorrichtung (700) umfaßt

(a) ein ein optisches Bild bildendes Element (200-216) zur Erzeugung eines optischen Bildes aus einem Videosignal;
(b) eine Projektionslinse (502) zur Projektion eines vergrößerten Bildes des optischen Bildes, das durch das ein optisches Bild bildende Element (200 - 216) gebildet wird;
(c) ein Gehäuse (505) zur Aufnahme und Stüzung des ein optisches Bild bildenden Elementes (200 - 216) und der Projektionslinse (502); und
(d) einen Bildschirm (600) zur Darstellung des optischen Bildes durch Übertragung der projizierten Lichtstrahlen, die auf ihn fallen, auf seine äußere Betrachtungsseite, dadurch charakterisiert, daß der Bildschirm (600) besteht aus einer konkaven Linse (602) auf der innenliegenden Lichteingangsseite zur Übertragung eines Teils des Lichtes zur Außenseite des Bildschirms (600) und einer streuenden Oberfläche (601) auf der außen liegenden Betrachtungsseite, wobei seine Außenseite an dem Gehäuse (505) befestigt ist.

2. Projektionsanzeigevorrichtung zur Verwendung in einem Großbildschirmanzeigegeräten, die eine Vielzahl derartiger Vorrichtungen in einer Matrixanordnung besitzen, wobei die Vorrichtung (700) umfaßt

(a) ein ein optisches Bild bildendes Element (200-216) zur Erzeugung eines optischen Bildes aus einem Videosignal;
(b) eine Projektionslinse (502) zur Projektion eines vergrößerten Bildes des optischen Bildes, das durch das ein optisches Bild bildende Element (200 - 216) gebildet wird;
(c) ein Gehäuse (505) zur Aufnahme und Stüzung des ein optisches Bild bildenden Elementes (200 - 216) und der Projektionslinse (502); und
(d) einen Bildschirm (600) zur Darstellung des optischen Bildes durch Übertragung der projizierten Lichtstrahlen, die auf ihn fallen, auf seine außen liegende Betrachtungsseite, dadurch charakterisiert, daß der Bildschirm (600) besteht aus einer Platte (605) mit verteiltem Brechungsindex auf der innen liegenden Lichteingangsseite, deren Brechungsindex fortschreitend im Verhältnis zum Abstand von der Mitte zu den Ecken hin zunimmt, um einen Teil des Lichtes in Richtung der Außenseite des Bildschirms (600) zu übertragen, und aus einer streuenden Oberfläche (601) auf der außen befindlichen Betrachtungsseite, wobei seine Außenseite an dem Gehäuse (505) befestigt ist.

3. Großbildschirmanzeigegerät, das eine Vielzahl von Anzeigevorrichtungen nach einem der vorhergehenden Ansprüche umfaßt.

**Revendications**

1. Dispositif d'affichage par projection pour une utilisation dans un appareil d'affichage à grand écran ayant une pluralité de tels dispositifs disposés en une matrice, le dispositif (700) comprenant :

(a) une section de formation d'image optique (200-216) pour créer une image optique à partir d'un signal vidéo ;
(b) une lentille de projection (502) pour projeter une image agrandie de l'image optique formée par la section de formation d'image optique ;
(c) un boîtier (505) pour loger et supporter la section de formation d'image optique (200-216) et la lentille de projection (502) ; et
(d) un écran (600) pour afficher l'image optique au moyen d'une transmission de rayons lumineux projetés tombant sur lui de son côté extérieur de visualisation, caractérisé en ce que l'écran (600) est composé d'une lentille concave (602) prévue sur le côté intérieur de pénétration de lumière pour transmettre une partie de la lumière vers la périphérie de l'écran, et d'une surface diffusante (601) prévue sur le côté extérieur de visualisation, avec sa périphérie fixée au boîtier (505).

**2.** Dispositif d'affichage par projection pour une utilisation dans un appareil d'affichage à grand écran ayant une pluralité de tels dispositifs disposés en une matrice, le dispositif (700) comprenant :

(a) une section de formation d'image optique (200-216) pour créer une image optique à partir d'un signal vidéo ;
(b) une lentille de projection (502) pour projeter une image agrandie de l'image optique formée par la section de formation d'image optique ;
(c) un boîtier (505) pour loger et supporter la section de formation d'image optique (200-216) et la lentille de projection (502) ; et
(d) un écran (600) pour afficher l'image optique au moyen d'une transmission de rayons lumineux projetés tombant sur lui de son côté extérieur de visualisation, caractérisé en ce que l'écran (600) est composé d'une plaque à réfraction répartie (605) prévue sur le côté intérieur de pénétration de lumière et dans laquelle l'indice de réfraction augmente progressivement en fonction d'une distance du centre vers les angles pour transmettre une partie de la lumière vers la périphérie de l'écran (600), et d'une surface diffusante (601) prévue sur le côté extérieur de visualisation, avec sa périphérie fixée au boîtier (505).

**3.** Appareil d'affichage à grand écran comprenant une pluralité de dispositifs d'affichage selon une quelconque des revendications précédentes.

# FIG. 1

601  602                                              700

201

210  211
213
214
212

502  216  215

210  210

600                                     505

EP 0 471 478 B1

FIG. 2

# FIG. 3

EP 0 471 478 B1

# FIG. 4

# FIG. 5

EP 0 471 478 B1

# FIG. 6

n(x)
REFRACTIVE INDEX

x

601 605

600 505

11

FIG. 7

500

# F I G. 8